# EUROPEAN PATENT APPLICATION

(11) **EP 2 752 789 A1**
(43) Date of publication of application: **09.07.2014**
(21) Application number: 13290001.0
(22) Date of filing: 03.01.2013
(51) Int. Cl.: G06K 9/00, G06F 3/01

(54) **Method for adjusting the orientation of contents on an electronic display**

(71) Applicant: Alcatel Lucent, 75007 Paris (FR)
(72) Inventor: Van Lier, Jan, 70825 Korntal-Münchingen (DE)
(74) Representative: Lehmann, Thomas Alexander

(57) **Abstract**

A method for adjusting an orientation of contents on a display of an electronic display device, comprising steps of:
(a) taking a picture of a potential user of the electronic display device with a camera having a defined relative orientation to the display of the electronic display device;
(b) identifying at least one human face in the taken picture;
(c) determining the relative orientation of the at least one identified human face with respect to the display;
(d) adjusting the orientation of contents on the display based on a set of pre-set rules concerning the determined relative orientation, the set of pre-set rules comprising at least one pre-set rule; and
(e) repeating steps (a) to (d);
an electronic display device with a display for displaying contents provided for employing suchlike method for adjusting an orientation of the displayed contents; and
a software module for controlling an execution of steps of suchlike method.

## Description

The invention relates to a method for adjusting the orientation of contents on a display of an electronic display device, an electronic display device provided for employing the method, and a software module for carrying out the method.

### BACKGROUND ART

When mobile electronic devices with displays like smart phones, tablet PCs or e-book readers are being used, it is often preferable to automatically rotate a displayed content to landscape or portrait orientation to adapt the orientation to an orientation of a user relative to the display.

It is known to employ acceleration sensors integrated in mobile electronic devices for detecting an orientation of the electronic device in the Earth's gravitational force. Based on the detected orientation, the displayed content is oriented landscape or portrait depending on best match to the vertical.

However, this orientation of the displayed content does not always meet the user's desire if, for instance, the user is reading while lying horizontally. Further, the method fails if the device is put horizontally on a table.

### DESCRIPTION

It is therefore an object of the invention to provide an improved method for adjusting an orientation of contents on a display of an electronic display device. The method comprises steps of
(a) taking a picture of a potential user of the electronic display device with a camera having a defined relative orientation to the display of the electronic display device;
(b) identifying at least one human face in the taken picture;
(c) determining the relative orientation of the at least one identified human face with respect to the display;
(d) adjusting the orientation of contents on the display based on a set of pre-set rules concerning the determined relative orientation, the set of pre-set rules comprising at least one pre-set rule; and
(e) repeating steps (a) to (d).

The picture taken may be a portion of the half-space that the display faces to and that is limited by a plane that coincides with a plane of the display. The camera may be integrated to the electronic display device, or it may be attached to the electronic display device such that the relative orientation of the camera with regard to the display is well defined. Face detection methods that are well known in the art may be used to identify the at least one human face in the taken picture.

With the suggested method, the orientation of contents on the display can be adjusted in dependence of the relative orientation of the identified human face with respect to the display. The suggested method may effectively work even in cases when prior art methods fail, for instance when the electronic display device is placed horizontally on a table, and may have the potential to substitute the conventional gravity-based devices.

In one embodiment, the orientation of contents on the display may be adjusted in such a way that a decision is taken based on the set of preset rules that is selected from the two options "portrait" or "landscape". In another embodiment, the orientation of contents on the display may be adjusted based on the set of preset rules in such a way that it represents an intermediate orientation between the two options "portrait" or "landscape".

The provided method may be combined with a conventional method of adjusting orientation of contents on the display by overruling a result obtained by a conventional device if a clearly detected orientation is available from the method of the invention, but relying on the conventional method if no human face is identified in the taken picture.

According to a preferred embodiment, the electronic display device is selected from a group consisting of a tablet computer, a smartphone, an e-book reader device, and a personal digital assistant.

In another preferred embodiment, the set of pre-set rules comprises a rule that the orientation of contents on the display is based on the result of a weighting applied to the determined relative orientations of faces identified in the picture if more than one face is identified. By that, an orientation of contents on the display can be found that is most suitable for a majority of simultaneous viewers of the display. The result of the weighting applied to the determined relative orientations of faces identified in the picture is a weighted average relative orientation which is subject to the set of pre-set rules for adjusting the orientation of contents on the display.

In yet another embodiment, the weighting comprises a weighting factor of approximately one for the largest identified face in the picture, and weighting factors of approximately zero for all other identified faces. The phrase "factor of approximately one", as used in this application, shall be understood particularly as a factor that is smaller than or equal to one, and is larger than or equal to 0.7, preferably larger than or equal to 0.8, and, most preferably, larger than or equal to 0.85. The phrase "factor of approximately zero", as used in this application, shall be understood particularly as a factor that is larger than or equal to zero, and is smaller than or equal to 0.3, preferably smaller than or equal to a 0.2, and, most preferably, smaller than or equal to 0.15. Thereby, in the case of several identified faces in the picture, it can be achieved that the orientation of the face of the person that is closest to the display, and therefore is the most probable viewer, influences the orientation of the contents of the display at most.

According to another preferred embodiment, the weighting comprises a weighting factor of approximately one for an identified face that is closest to a display center normal direction, and weighting factors of approximately zero for all other identified faces.

The phrase "display center normal direction", as used in this application, shall be understood particularly as a direction that starts at the center of the display and points upwards in a direction that is perpendicular to a plane that coincides with the display. By that, in the case of several identified faces in the picture, it can be achieved that the orientation of the face of the person that is closest to a center region of the display, and therefore is the most probable viewer, influences the orientation of the contents of the display at most.

If the weighting comprises weighting factors that are proportional to a face size and/or are indirectly proportional to a deviation of a virtual line between the determined face and the display center from the display center normal direction, an orientation of the contents on the display can be achieved that is averaged with regard to the identified faces of viewers and is most suitable for a majority of the persons identified as potential viewers.

In another preferred embodiment, the orientation of contents on the display may be adjusted to be "portrait" for at least a first pre-set range of a result of the weighting, and "landscape" for at least a second pre-set range of a result of the weighting.

In yet another preferred embodiment, the method comprises steps of
(b1) applying facial recognition to the identified faces, and
(b2) comparing facial recognition data with at least one deposited picture of at least one main user of the electronic display device, wherein the weighting comprises a weighting factor of approximately one applied to a determined relative orientation of an identified and recognized face of the at least one main user of the electronic display device, and weighting factors of approximately zero for all other identified and unrecognized faces.

Thereby, it can be achieved that the orientation of contents on the display is determined by the relative orientation of the at least one main user with respect to the display, although other viewers are as well looking at the display.

It is another object of the invention to provide an electronic display device with a display for displaying contents, which is provided for adjusting an orientation of the displayed contents by carrying out steps of an embodiment of one of the disclosed methods or combinations thereof, so as to achieve the above described advantages.

To this end, the electronic display device is further furnished with a software module for controlling an execution of steps of an embodiment of one of the disclosed methods or combinations thereof, wherein the steps are converted into a program code that is implementable in memory unit of the electronic display device and that is executable by a processing unit of the electronic display device. In this solution, a fast adaptation of method steps and a high portability can be achieved.

In a further preferred embodiment, the electronic display device comprises an integrated camera having a lens that is aiming in a direction that is substantially perpendicularly arranged with regard to the display. With the camera being integrated in the electronic display device, the relative orientation of the camera with regard to the display can be extraordinary well defined.

Other variations to the disclosed embodiments can be understood and effected by those skilled in the art in practicing the claimed invention, from a study of the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. A method for adjusting an orientation of contents on a display of an electronic display device, comprising steps of:
(a) taking a picture of a potential user of the electronic display device with a camera having a defined relative orientation to the display of the electronic display device;
(b) identifying at least one human face in the taken picture;
(c) determining the relative orientation of the at least one identified human face with respect to the display;
(d) adjusting the orientation of contents on the display based on a set of pre-set rules concerning the determined relative orientation, the set of pre-set rules comprising at least one pre-set rule; and
(e) repeating steps (a) to (d).

2. The method as claimed in claim 1, wherein the set of pre-set rules comprises a rule that the orientation of contents on the display is based on the result of a weighting applied to the determined relative orientations of faces identified in the picture if more than one face is identified.

3. The method as claimed in claim 1 or 2, wherein the weighting comprises a weighting factor of approximately one for the largest identified face in the picture, and weighting factors of approximately zero for all other identified faces.

4. The method as claimed in claim 1 or 2, wherein the weighting comprises a weighting factor of approximately one for an identified face that is closest to a display center normal direction, and weighting factors of approximately zero for all other identified faces.

5. The method as claimed in one of the preceding claims, wherein the weighting comprises weighting factors that are proportional to a face size and/or are indirectly proportional to a deviation of a virtual line between the determined face and the display center from the display center normal direction.

6. The method as claimed in one of the preceding claims, comprising steps of
(b1) applying facial recognition to the identified faces, and
(b2) comparing facial recognition data with at least one deposited picture of at least one main user of the electronic display device, wherein the weighting comprises a weighting factor of approximately one applied to a determined relative orientation of an identified and recognized face of the at least one main user of the electronic display device, and weighting factors of approximately zero for all other identified and unrecognized faces.

7. An electronic display device with a display for displaying contents, provided for adjusting an orientation of the displayed contents by carrying out steps of a method as claimed in one of the preceding claims.

8. The electronic display device as claimed in claim 7, comprising an integrated camera having a lens that is aiming in a direction that is substantially perpendicularly arranged with regard to the display.

9. A software module for controlling an execution of steps of the method as claimed in any of claims 1 to 6, wherein the steps are converted into a program code that is implementable in a memory unit of the electronic display device and that is executable by a processing unit of the electronic display device.
